# FASCICULE DE BREVET EUROPEEN

(11) **EP 0 460 152 B1**
(45) Date de publication et mention de la délivrance du brevet: **11.03.1998**
(21) Numéro de dépôt: 91900692.4
(22) Date de dépôt: 21.12.1990
(51) Int. Cl.: G06F 3/033

(54) **SYSTEM SELECTIF D'ACCES A DES SERVICES**
AUSWAHLSYSTEM FÜR DIENSTZUGRIFFE
RANDOM SERVICE ACCESS SYSTEM

(30) Priorité: 27.12.1989 BE 8901384
(43) Date de publication de la demande: 11.12.1991
(73) Titulaire: Gifila S.A., B-4680 Oupeye (BE)
(72) Inventeur: HURLET, Philippe, B-4680 Hermée (BE); WATRIN, Charles, B-4280 Hannut (BE)
(74) Mandataire: Vanderperre, Robert
(86) Numéro de dépôt international: BE9000072
(87) Numéro de publication internationale: WO9110184

(56) Documents cités:
- WO-A-89/00321
- FR-A- 2 406 855
- IEEE Communications Magazine, vol. 26, no. 6, juin 1988, IEEE, (New York, US), J.H. Irven et al.: "Multi-Media information services: A laboratory study", pages 27-33,36-44

## Description

La présente invention concerne un système destiné à sélectionner l'accès à des services offerts par les entreprises de services et de consultations dans le but d'orienter chaque client vers le service ou le consultant spécialisé qui est le mieux à même de le servir selon son problème ou son choix particulier.

On connaît des systèmes qui assurent la gestion des files d'attente. Un système typique comprend un pupitre sur lequel le client désigne le service ou l'agent auquel il désire s'adresser et qui lui délivre un ticket numéroté. L'agent du service concerné appelle les clients qui ont choisi son service dans l'ordre d'arrivée. Un tel système permet certes d'établir des files d'attente pour chaque service, mais tous les clients disposent du même choix. Cette première approche est sans doute équitable dès lors que l'on considère que les services offerts sont à la disposition de tout le monde et que chacun a le droit d'y accéder à son gré. Une telle considération purement rationnelle fait cependant fi de l'objectif d'efficacité professionnelle et de rentabilité commerciale ainsi que des différentes catégories de clients.

C'est ainsi, par exemple, que dans une agence bancaire, un directeur d'entreprise est intéressé par des services par lesquels un particulier ou un commerçant n'a aucune raison d'être concerné. Bien sûr, un système de gestion d'accueil connu permet de répartir les services offerts en zones de fonctions indépendantes et d'orienter rapidement les clients vers une zone de fonction adéquate.

Toutefois, il se trouve que, même avec un tel système de gestion d'accueil, la charge des différentes zones de fonctions n'est pas toujours égale ou rationnelle. Un responsable d'une zone de fonction peut être sollicité par un client dont le service qu'il demande effectivement ne correspond pas exactement à la compétence professionnelle spécialisée dudit responsable, rendant ainsi celui-ci indisponible pour un client qui se présenterait et dont le service qu'il demande nécessite réellement la compétence professionnelle dudit responsable. Cela va évidemment à l'encontre de l'efficacité du service offert et, au second degré, à l'encontre d'une bonne rentabilité d'exploitation. Une analyse semblable peut être faite pour d'autres applications.

Considérant qu'une simple extension du choix des services offerts à la clientèle ne résout guère le problème évoqué ci-dessus, et partant du postulat que si tous les services doivent pouvoir être offerts à la clientèle, tous les clients ne doivent cependant pas avoir droit à accéder aux mêmes services, le demandeur a conçu une nouvelle approche, plus objective et plus personnalisée, de la problématique de l'accès aux services par la clientèle.

Le but de la présente invention est ainsi de réaliser un système sélectif d'accès à des services qui permet de proposer des services variant sélectivement selon la catégorie du client et qui permet de réserver des services spécialisés à certains clients seulement.

Cet objectif est atteint, grâce à l'invention, par un système selon la revendication 1.

Dans un mode de réalisation le système peut comprendre en outre un lecteur de code d'accès et le dispositif de décision est connecté pour recevoir également au moins un code d'accès prédéterminé de manière à produire un signal de changement d'étape en réponse à la présence d'un code d'accès prédéterminé et/ou d'un signal de sélection identifiant l'une quelconque de plusieurs secondes catégories de services, le signal de changement d'étape servant à appeler de la mémoire une nouvelle composition de grille de sélection d'accès offrant des services sélectionnés réservés à une catégorie de clients de manière que cette nouvelle grille de sélection soit affichée sur le dispositif de présentation.

Le code d'accès peut être prévu pour intervenir avant une étape quelconque du processus de sélection d'accès et pas nécessairement au début du processus.

Le système sélectif d'accès selon l'invention peut être intégré dans un système de gestion d'accueil quelconque qui assure normalement une optimalisation de la relation entre l'ensemble des besoins de la clientèle en général et l'ensemble des compétences des agents qui peuvent y répondre.

L'invention est exposée plus en détails dans ce qui suit à l'aide des dessins ci-joints.

La figure 1 représente schématiquement la constitution d'un système selon l'invention.

La figure 2 est un diagramme de flux illustrant le fonctionnement du système selon l'invention dans un premier mode de réalisation.

La figure 3 est un diagramme de flux illustrant le fonctionnement du système selon l'invention dans un deuxième mode de réalisation.

La figure 4 illustre une séquence typique de grilles de sélection d'accès exemplaires appelées par changements d'étape successifs dans un processus de sélection d'accès selon l'invention.

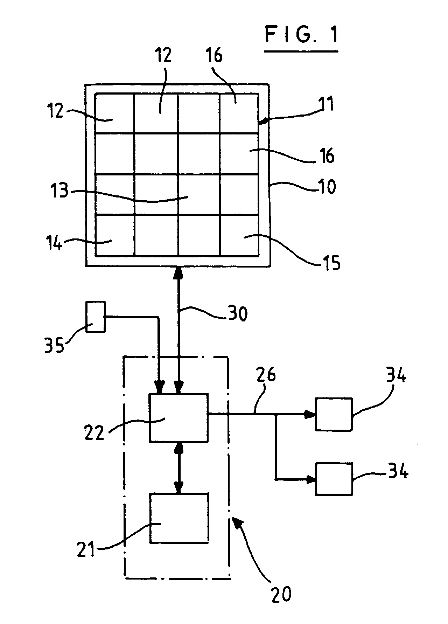

Se reportant à la figure 1, le système selon l'invention comprend un dispositif de présentation 10 sur lequel est affichée une grille de sélection d'accès 11, et un module gestion 20 connecté au dispositif de présentation 10 par une ligne de transmission de données 30. La grille de sélection d'accès 11 se compose d'un ensemble de cases correspondant chacune à une catégorie de services réservée à une catégorie de clients. Dans un exemple d'implémentation pour agence bancaire, plusieurs cases 12 peuvent être réservées à des services courants rapides, une case 13 peut être réservée aux entreprises, une case 14 peut être réservée aux PME, une case 15 peut être réservée à la gestion de fortunes, des cases 16 peuvent être réservée à des opérations personnalisées. Au dispositif de présentation 10 est associé un moyen quelconque pour produire un signal de sélection identifiant une case de la grille de sélection 11. Le dispositif de présentation 10 peut par exemple être un écran tactile qui permet à chaque client, par simple contact du doigt, d'indiquer au système la catégorie du service par lequel il est concerné.

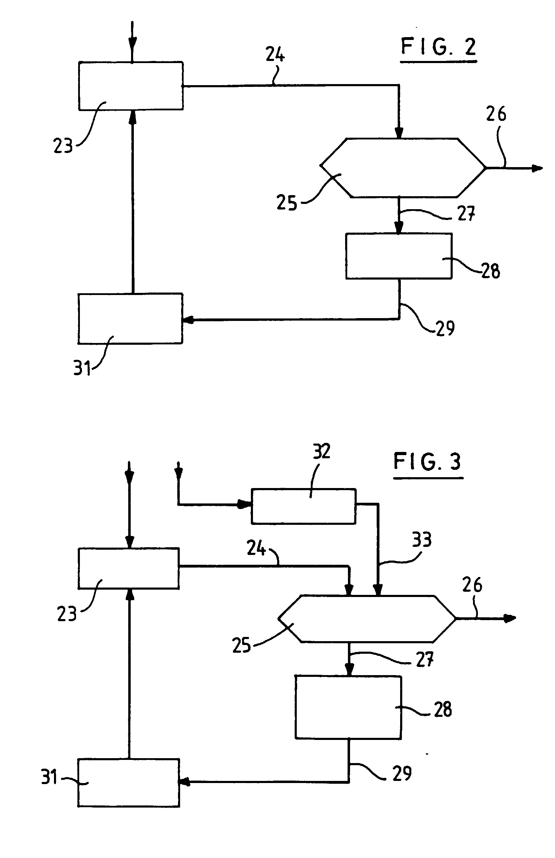

Le module de gestion 20 est relié à plusieurs postes d'agents 34. Il comprend une mémoire 21 dans laquelle résident les informations permettant de composer différentes grilles de sélection d'accès et un dispositif de décision 22. La figure 2 montre un diagramme de flux illustrant le fonctionnement du module 20. Le bloc 23 représente une sélection correspondant à une case de la grille 11. Le signal de sélection 24 est reçu par le dispositif de décision 22 qui l'identifie et détermine (bloc 25) si la sélection effectuée par le client requiert ou non l'appel d'une autre étape de sélection d'accès. Dans le cas d'une sélection d'une case correspondant à une catégorie courante de clients, par exemple une case 12 qui indique que le service requis ne demande aucune compétence spécialisée, le dispositif de décision 22 identifie le signal de sélection par lequel il reconnaît que le processus de sélection n'appelle pas d'autre étape de sélection d'accès. En réponse au signal de sélection qui identifie la catégorie de client, le dispositif de décision 22 délivre un signal d'enregistrement 26 de la catégorie identifiée. L'identité de la catégorie se trouve stockée temporairement dans la mémoire 21 afin d'être appelée ultérieurement, à partir d'un poste d'agent 34, par un agent disponible pour recevoir et servir le client.

Par contre, dans le cas d'une sélection d'une case correspondant à une catégorie de clients requérant un service spécialisé, par exemple un service propre à une entreprise (case 13 dans l'application exemplaire citée plus haut), le dispositif de décision 22 identifie le signal de sélection et détermine qu'une étape de sélection d'accès supplémentaire est requise. Le dispositif de décision délivre alors un signal de changement d'étape 27 servant à identifier et à commander la composition de la nouvelle grille de sélection d'accès (bloc 28) grâce à un logiciel approprié. Les données 29 représentant la nouvelle grille de sélection d'accès sont alors transmises dans la ligne de transmission de données 30 vers le dispositif d'affichage associé au dispositif de présentation 10 afin de commander l'affichage (bloc 31) de la nouvelle grille de sélection d'accès.

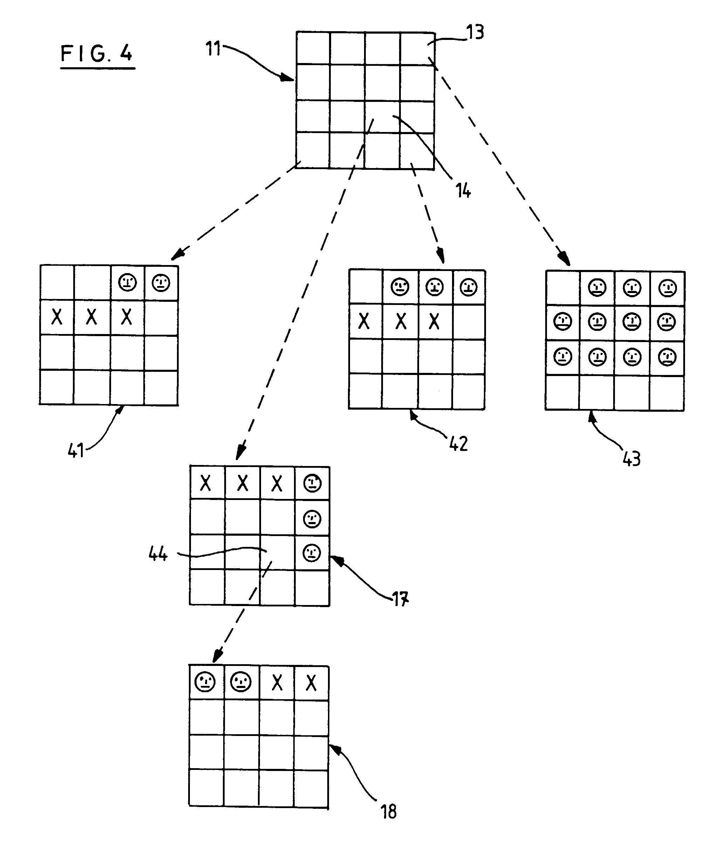

La figure 4 illustre schématiquement diverses grilles de sélection d'accès qui peuvent être appelées par le système à partir de la grille de sélection initiale 11. Par exemple, la sélection de la case 13 correspondant à la catégorie "Entreprises", appelle une nouvelle grille de sélection d'accès 17. Les cases de celles-ci peuvent alors permettre d'avoir accès à un nouveau choix de services spécialisés tels que crédits, crédit de caisse, placements à court terme ou d'autres opérations spécialisées pouvant intéresser une entreprise. D'autres grilles de sélection d'accès peuvent être appelées d'une manière similaire à partir de la grille de sélection initiale ou d'une grille de sélection subséquente quelconque. On notera par exemple les grilles de sélection 41, 42 et 43 appelées à partir des cases telles que 14, 15 et 16 respectivement.

Le processus de sélection d'accès peut se répéter à partir d'une nouvelle grille telle que la grille de sélection 17. Par exemple, une grille 18 peut être appelée à partir de la case 44. Le processus de sélection peut ainsi se poursuivre de proche en proche.

Dans une variante de réalisation intéressante, l'invention prévoit de conditionner l'appel d'une nouvelle étape de sélection à l'introduction d'un code d'accès identifiant une catégorie de clients. L'introduction du code d'accès peut être prévue au moyen d'un dispositif quelconque 35 (Figure 1). Le code d'accès peut par exemple être porté sur une carte magnétique destinée à être lue par un lecteur de carte associé au dispositif de présentation et connecté au module de gestion 20 par la ligne 36. Le processus de sélection d'accès dans cette variante est illustré par le diagramme de la figure 3. Le dispositif de décision est organisé pour qu'un changement d'étape de sélection ne soit autorisé que lorsqu'il reconnaît la présence d'un code d'accès prédéterminé. Ce n'est alors qu'en réponse à un code d'accès (bloc 32) que le dispositif de décision autorise un changement d'étape (27) et l'appel d'une nouvelle grille de sélection d'accès. Le restant du processus est le même que dans le cas du mode de réalisation illustré par la figure 2. Le système peut être organisé pour que le code d'accès intervienne avant une étape quelconque du processus de sélection d'accès et pas nécessairement lors de la première sélection.

L'agencement et l'organisation du dispositif de décision ainsi que l'organisation du logiciel mis en oeuvre pour l'exécution des fonctions logiques requises selon l'invention sont de la compétence normale de l'homme du métier.

Les modes de réalisation de l'invention décrits dans ce qui précède sont des exemple donnés à titre illustratif et l'invention n'est nullement limitée à ces exemples. Toute modification, toute variante et tout agencement équivalent correspondant au contenu des revendications doivent être considérés comme compris dans le cadre de l'invention.

## Revendications

1. Système pour sélectionner l'accès à un agent spécialisé parmi plusieurs agents ayant des compétences différentes, comprenant un dispositif de sélection qui présente au moins une case (12) associée à un moyen pour produire un signal de sélection, caractérisé en ce que le dispositif de sélection est un dispositif de présentation (10) pour afficher une grille de sélection d'accès (11) comprenant au moins une deuxième case (13, 14 ...) associée à un moyen pour produire un signal de changement d'étape (27) pour appeler une nouvelle grille de sélection d'accès (17, 41, 42, etc),
et en ce qu'il comprend en outre un module de gestion de sélection (20) comprenant :
une mémoire (21) contenant plusieurs grilles de sélection d'accès (11, 17, 18, 41, ...) et un dispositif de décision (22) connecté à plusieurs postes d'agents (34), le dispositif de décision (22) répondant à un signal de sélection pour envoyer un signal d'enregistrement de sélection (26) à un poste d'agent sélectionné, et le dispositif de décision (22) répondant à un signal de changement d'étape (27) pour appeler une nouvelle grille de sélection d'accès (17, 18, 41, ...) de la mémoire (21) et en commander l'affichage sur le dispositif de sélection (10).

2. Système suivant la revendication 1, caractérisé en ce que le dispositif de décision (22) répond en outre à au moins un code d'accès (35) pour appeler une nouvelle grille de sélection d'accès (17, 18, 41, ...).

3. Système suivant la revendication 2, caractérisé en ce que le dispositif de décision (22) répond à un code d'accès (35) après un ou plusieurs changements d'étape de sélection.

## Patentansprüche

1. System zur Auswahl des Zugriffs auf einen spezialisierten Angestellten von mehreren Agenten, die unterschiedliche Kompetenzen haben, das eine Auswahlvorrichtung umfaßt, die mindestens ein Feld (12) aufweist, das mit einer Vorrichtung zur Erzeugung eines Auswahlsignals verbunden ist, dadurch gekennzeichnet, daß die Auswahlvorrichtung eine Darstellungsvorrichtung (10) zum Anzeigen eines Zugriffsauswahlgitters (11) ist, das mindestens ein zweites Feld (13, 14 ...) umfaßt, das mit einer Vorrichtung zur Erzeugung eines Schrittwechselsignals (27) zum Aufruf eines neuen Zugriffsauswahlgitters (17, 41, 42, etc.) verbunden ist, und dadurch, daß es außerdem ein Auswahlverwaltungsmodul (20) aufweist, das umfaßt:
einen Speicher (21), der mehrere Zugriffsauswahlgitter (11, 17, 18, 41, ...) und eine Entscheidungseinrichtung (22) enthält, die mit mehreren Schalterterminals (34) verbunden ist, wobei die Entscheidungseinrichtung (22) auf ein Auswahlsignal anspricht, um ein Auswahlregistrierungssignal (26) an ein ausgewähltes Schalterterminal zu senden, und wobei die Entscheidungseinrichtung (22) auf ein Schrittwechselsignal (27) anspricht, um ein neues Zugriffsauswahlgitter (17, 18, 41 ...) des Speichers (21) aufzurufen und dessen Anzeige auf der Auswahlvorrichtung (10) zu bewirken.

2. System nach Anspruch 1, dadurch gekennzeichnet, daß die Entscheidungseinrichtung (22) außerdem auf mindestens einen Zugriffscode (35) anspricht, um ein neues Zugriffsauswahlgitter (17, 18, 41, ...) aufzurufen.

3. System nach Anspruch 2, dadurch gekennzeichnet, daß die Entscheidungseinrichtung (22) nach einem oder mehreren Auswahlschrittwechseln auf einen Zugriffscode (35) anspricht.

## Claims

1. System for selecting access to a specialized agent amongst several agents having different qualifications, comprising a selection device having at least one division (12) associated to means for producing a selection signal, characterised in that the selection device is a display device (10) to display an access select grid (11) comprising at least a second division (13, 14, ...) associated to means for producing a step change signal (27) to call a further access select grid (17, 41, 52, etc), and in that the system further comprises a selection management module (20) comprising a store (21) containing several access select grids (11, 17, 18, 41, ...) and a decision device (22) connected to a plurality of agent stations (34), said decision device (22) being responsive to a selection signal to send a selection registering signal (26) to a selected agent station, and said decision device (22) being responsive to a step change signal (27) to call a further access select grid (17, 18, 41, ...) from the store (21) and to control display thereof on the selection device (10).

2. System according to claim 1, characterised in that the decision device (22) is further responsive to at least one access code (35) to call a further access select grid (17, 18, 41, ...).

3. System according to claim 2, characterised in that the decision device (22) is responsive to an access code (35) after one or several selection step changes.
